# EUROPÄISCHE PATENTSCHRIFT

(11) **EP 3 409 151 B1**
(45) Veröffentlichungstag und Bekanntmachung des Hinweises auf die Patenterteilung: **23.09.2020**
(21) Anmeldenummer: 18172815.5
(22) Anmeldetag: 17.05.2018
(51) Int. Cl.: A47J 31/44

(54) **GETRÄNKEAUTOMAT MIT OPTISCHER MESSVORRICHTUNG**
BEVERAGE MACHINE WITH OPTICAL MEASURING SYSTEM
DISTRIBUTEUR AUTOMATIQUE DE BOISSONS À DISPOSITIF DE MESURE OPTIQUE

(30) Priorität: 30.05.2017 DE 102017209018
(43) Veröffentlichungstag der Anmeldung: 05.12.2018
(73) Patentinhaber: BSH Hausgeräte GmbH, 81739 München (DE)
(72) Erfinder: Wrehde, Stefan, 83365 Nußdorf (DE); Mathes, Anton, 83364 Neukirchen am Teisenberg (DE); Beck, Rudolf, 84518 Garching a. d. Alz (DE); Strobl, Robert, 83246 Unterwössen (DE)

(56) Entgegenhaltungen:
- EP-A1- 2 449 929
- WO-A1-2016/020266
- US-A1- 2010 236 660

## Beschreibung

Die Erfindung betrifft einen Getränkeautomat zur Herstellung von Getränken unter Verwendung eines Granulats, mit einem Behälter zur Aufnahme des Granulats, mit einer Fülleinheit zur Einfüllung des Granulats in den Behälter und eine Getränkezubereitungseinheit (3). Die Erfindung betrifft außerdem ein entsprechendes Verfahren zum Betrieb eines Getränkeautomaten mit den Schritten: Bereitstellen eines Behälters, Befüllen des Behälters und Messen des Füllstands in dem Behälter mittels optischer Abstandsmessung.

Die WO 2010 959 37 A1 beschreibt ein Kaffeezubereitungsgerät, das über eine separate Dosierkammer verfügt. Ihr werden Kaffeebohnen zugeführt, bevor sie in eine Brühkammer gelangen. In der Dosierkammer wird eine erforderliche Menge an Kaffeebohnen mittels eines horizontalen und eines vertikalen Lichtstrahls gemessen. Aus der WO 2016 / 020 266 A1 ist ein Getränkebereiter mit einem Behälter zum Rösten von Bohnen mit Lichtbasierter Füllstandsmessung bekannt. Aus der EP 2 449 929 A1 ist es zudem bekannt, den Füllstand von Kaffee-Milch-Mischgetränken mit einem IR-Sensor zu erfassen.

Aufgabe der vorliegenden Erfindung ist es, einen Getränkeautomaten zur Herstellung von Getränken unter Verwendung eines Granulats und ein Verfahren zur Verfügung zu stellen, welcher bzw. welches eine verbesserte Füllmengenmessung des Granulats ermöglicht.

Diese Aufgabe wird durch einen Getränkeautomaten gemäß dem Hauptanspruch und ein Verfahren gemäß Anspruch 9 gelöst.

Der erfindungsgemäße Getränkeautomat zur Herstellung von Getränken unter Verwendung eines Granulats umfasst einen Behälter zur Aufnahme des Granulats, eine Fülleinheit zur Einfüllung des Granulats in den Behälter und eine Getränkezubereitungseinheit. Dabei ist der Getränkeautomat insbesondere ein Automat zur Herstellung von Kaffeegetränken, bevorzugt ein Kaffeevollautomat (KVA), wobei andere Getränkeautomaten, wie z. B. Eiweißshake-Automaten, je nach Anwendung ebenfalls bevorzugt sind.

Wie oben bereits ausgeführt, umfasst der Begriff "Granulat" sowohl körnige Materialien oder Zubereitungen als auch pulverförmige, wie z.B. Kaffeepulver. Eine vorbestimmte, je nach Getränkewahl ggf. variierende Menge des Granulats wird vor der Zubereitung des Getränks in den Behälter abgefüllt. Das Granulat muss nicht zwangsläufig in seiner zur Getränkezubereitung gewünschten Form in dem Getränkeautomaten gelagert sein. Es kann von außen zugeführt werden oder auch in gröberer Form vorliegen, welches zur Getränkezubereitung zerkleinert wird. Beispielsweise ist es bei Kaffeeautomaten für den Geschmack von Vorteil, wenn der Kaffee in Form von Kaffeebohnen gelagert wird und erst bei der Kaffeezubereitung eine voreingestellte Menge der Bohnen in einem Mahlwerk gemahlen wird. Das Mahlwerk ist dabei Teil der Fülleinheit oder die Fülleinheit ist zumindest mit dem Mahlwerk zur Zuführung des Mahlguts in den Behälter verbunden. Das gemahlene Kaffeepulver gelangt in den Behälter, der bei der Herstellung von Heißgetränken als Brühtopf bezeichnet wird.

Die Zubereitung des Getränks geschieht in der Getränkezubereitungseinheit, bei der Herstellung von Heißgetränken als Brüheinheit bezeichnet. Dazu wird der Behälter in der Regel nach der Befüllung in die Getränkezubereitungseinheit verbracht.

Die Erfindung ist dadurch gekennzeichnet, dass der Getränkeautomat eine Vorrichtung zur optischen Abstandsmessung umfasst, die dazu ausgelegt ist, den Füllstand in dem Behälter in Form eines Abstandswertes basierend auf der Laufstrecke eines Lichtstrahls zu messen. Solche Vorrichtungen zur optischen Abstandsmessung umfassen stets eine Lichtquelle, insbesondere eine Laserdiode, und einen Photosensor, insbesondere eine Photodiode oder einen Phototransistor. Sie messen Abstände bzw. Entfernungen, indem die Länge der Laufstrecke des Lichtstrahls ermittelt wird. Die Laufstrecke des Lichtstrahls ergibt den Abstandswert.

Zur optischen Abstandsmessung wird in der Regel ein Laserstrahl verwendet, weshalb die Vorrichtung auch als Laserentfernungsmesser bezeichnet wird. Der Einfachheit halber wird im Folgenden der Begriff "Entfernungsmesser" verwendet, der sich hier nur auf optische Entfernungsmesser bezieht.

Der Abstandswert ist der Abstand von einem vorbestimmten Ausgangspunkt zu einem Punkt, an dem der zum Messen verwendete Lichtstrahl reflektiert wurde. Der zum Messen verwendete Lichtstrahl wird im Folgenden als "Laserstrahl" bezeichnet, ohne damit andere mögliche Lichtstrahlen auszuschließen.

Zur Entfernungsbestimmung wird in der Regel eine Laufzeitmessung oder eine Phasenlagemessung, ggf. mit einem modulierten Lichtstrahl, durchgeführt.

Bezüglich des Abstandswertes ist in einem Laserentfernungsmesser stets die relative Lage des Ausgangspunkts des Strahls eindeutig bestimmt. In der Regel ist der Abstandswert die Hälfte der Laufstrecke des emittierten und reflektierten Lichtstrahls. Er kann zusätzlich um eine vorbestimmte Konstante vergrößert oder reduziert sein, z. B. wenn intern mit einem Abstandswert relativ zum Behälterboden oder zu einer Oberkante des Behälters gerechnet wird. Damit unterscheidet sich das verwendete Messverfahren grundsätzlich von einer Füllhöhenbestimmung basierend auf anderen optischen Methoden, z. B. mittels Lichtschranken.

Der von dem Entfernungsmesser erhaltene Abstandswert liefert unter anderem die Erkenntnis, ob ein Behälter an der Messposition überhaupt vorhanden ist, da im Falle seiner Anwesenheit der gemessene Abstandswert deutlich geringer ist, als wenn sich kein Behälter an dieser Position befindet.

Gemäß einer bevorzugten Ausführungsform umfasst der Laserentfernungsmesser einen Halbleiterlaser, insbesondere eine Laserdiode. Normalerweise sind Halbleiterlaser Kantenemitter oder Oberflächenemitter, wie z. B. Vertical Cavity Surface Emitting Laser (VCSEL). Im Vergleich zu Kantenemittern haben Oberflächenemitter den Vorteil, dass die Herstellungskosten sehr gering sind und sie einen vergleichsweise geringen Stromverbrauch aufweisen. Zudem sind VCSEL monomodig verfügbar und bezüglich der Wellenlänge abstimmbar, was für die Genauigkeit einer Abstandsmessung von Vorteil ist.

Nach einer weiteren vorteilhaften Ausgestaltung der Erfindung liegen die Lichtquelle und der Photosensor des Entfernungsmessers in Form eines einzigen elektronischen Bauteils vor. Insbesondere sind die Laserquelle und der Photosensor in einem Laserentfernungsmesser in einem einzigen elektronischen Bauteil ausgeführt, insbesondere auf einem Halbleiterbauteil. Bevorzugt ist der Laseremitter mit einem Monitorsensor ausgestattet. Besonders bevorzugt sind Laserdioden mit integrierter Monitordiode. Bezüglich einem VCSEL ist insbesondere ein longitudinal-integrierter Monitorsensor bevorzugt, insbesondere eine unter dem rückwärtigen Spiegel integrierte Photodiode, oder ein transversal-integrierter Monitorsensor bevorzugt, insbesondere eine resonante Photodiode für Licht eines auf dem Halbleiter benachbarten Oberflächenemitters.

Ein Vorteil dier Ausführung mit einem Kombinationsbauteil gegenüber bekannten optischen Entfernungsmesssystemen ist die Erzeugung der ausgesandten Lichtwelle und die Detektion bzw. Überlagerung der vom Messobjekt reflektierten Lichtwelle nahezu am selben Ort. Durch die nahezu vollständige örtliche Identität von Sender und Empfänger werden die geometrischen Herausforderungen, welche in anderen Technologien aus der räumlichen Trennung von Sender und Empfänger entstehen, systematisch umgangen. Zudem muss nur ein optischer Weg, nämlich der vom Sensor zum Objekt, frei von Hindernissen und Störungen gehalten werden.

Nach einer weiteren vorteilhaften Ausgestaltung der Erfindung wird der Lichtstrahl der Vorrichtung zur optischen Abstandsmessung zur Ermittlung des Abstandswerts mittels eines optischen Elements umgelenkt. Dies hat den Vorteil, dass die Vorrichtung zur optischen Abstandsmessung nicht zwingend über dem Behälter positioniert sein muss, sondern die Wahl des Anbringungsortes freier gestaltet werden kann, z. B. seitlich neben dem Behälter oder in einem nahezu beliebigen freien Platz im Gehäuse. Bevorzugte optische Ablenkungselemente sind Elemente der Gruppe Spiegel und Prismen. Es kann ein einziges Element verwendet werden oder ggf. auch mehrere, z. B. bei einer mehrmaligen Umlenkung des Lichtstrahls.

Da ein Granulat rieselfähig ist, ist der Behälter in der Regel an einer Oberseite offen, so dass das Granulat der Schwerkraft folgend von der Oberseite aus eingefüllt werden kann. Daher ist eine Einstrahlung des Lichtstrahls von der Oberseite des Behälters aus in den meisten Anwendungsfällen vorzuziehen. Bei einer Verkippung des Behälters gegenüber der Senkrechten kann der Lichtstrahl entsprechend schräg in den Behälter fallen.

Granulat bildet nach dem Befüllen des erfassten Behälters in der Regel keine ebene Oberfläche. Eine eindimensionale Erfassung kann daher ungenau sein. Erfindungsgemäß umfasst der Getränkeautomat daher eine Bewegungseinheit, die dazu ausgelegt ist, den Strahl des Entfernungsmessers relativ zum Behälter zu bewegen, sodass innerhalb eines Messintervalls mehrere Abstandswerte von unterschiedlichen Bereichen des Behälters gemessen werden können. Dabei kann der Entfernungsmesser oder ein den Strahl ablenkendes optisches Element oder der Behälter bewegt werden. Es können aber auch zwei dieser Elemente oder alle drei gleichzeitig bewegt werden, um eine zweidimensionale Erfassung zu erreichen. Die Bewegung kann eine Verschiebung, Verkippung oder Verschwenkung des Entfernungsmessers oder eines optischen Elements oder des Behälters oder einer Kombination der Bewegung dieser Elemente sein. Mit einer einfachen, beispielsweise einachsigen Schwenkbewegung kann ein Linienprofil bzw. Schnittbild einer Topographie der Granulatoberfläche erfasst und damit eine höhere Genauigkeit gegenüber der Erfassung eines einzelnen oder weniger Einzelwerte erzielt werden.

Der Strahl bzw. das betreffende Element kann um eine zur Emissionsrichtung des Strahls senkrechte erste Achse verkippt oder parallel zu dieser Achse verschoben. Vorzugsweise wird der Strahl bzw. das betreffende Element um eine zweite zur Emissionsrichtung des Strahls und zur ersten Achse senkrechte zweite Achse verkippt, bzw. parallel zu dieser Achse verschoben. Die Genauigkeit der Füllhöhenbestimmung lässt sich also verbessern, indem ein weiteres Linienprofil in einer Richtung orthogonal zur Erstreckung des ersten Linienprofils erfasst wird

Mit einer einachsigen Verschiebung des Laserstrahls relativ zum Behälter kann ein "Laservorhang", mit einer einachsigen Verschwenkung ein "Laserfächer" erzeugt werden, um ein Linienprofil zu erfassen. Nach einer weiteren vorteilhaften Ausgestaltung der Erfindung kann die Bewegung um zwei voneinander verschiedene Achsen erfolgen, so dass mit einer mehrachsigen Verschwenkung ein "Laserkegel" und bei einer mehrachsigen Verschiebung ein "Laserquader" ein dreidimensionales Flächenprofil bzw. eine Topographie der gesamten oder eines wesentlichen Abschnitts der Granulatoberfläche erfasst werden kann. Sie kann die genaueste Datenbasis für die Ermittlung des Füllvolumens eines erfassten Behälters liefern

Nach einer weiteren Ausgestaltung der Erfindung braucht nicht nur ein einziger, sondern können prinzipiell mehrere Behälter per Laserstrahl überwacht werden. Dazu können ihn optische Umlenkmittel in nahezu jeden Bereich des Getränkegeräts umlenken, um beispielsweise Frischwasserbehälter, Restwasserbehälter Tresterschalen oder Mich- und Bohnenbehälter zu erfassen. Nähere Einzelheiten dazu sind der Anmeldung mit der Anmeldernummer 201604573 desselben Anmelders vom selben Tage zu entnehmen, die diesbezüglich zum Inhalt auch der vorliegenden Anmeldung gemacht wird.

Bevorzugt umfasst die Bewegungseinheit für die erforderliche Relativbewegung des Laserstrahls gegenüber dem Behälter piezoelektrische Bewegungselemente. Alternativ oder zusätzlich kann die Bewegungseinheit eine Mechanik oder eine Mikromechanik zur Erzeugung der Bewegung umfassen, insbesondere eine mikromechanische Spiegelverstellung. Diese Elemente haben beide den Vorteil, dass die Bewegungseinheit dadurch einen nur sehr geringen Platzbedarf erfordert.

Im Falle eines leeren Behälters können mittels seiner Vermessung Informationen über seine Position, Bodenform, Randhöhe, sowie seiner Durchmessers erhalten werden. Zum Beispiel werden bei einem nicht korrekt bereitgestellten Behälter, bei dem ein Teil von Komponenten der Brüheinheit verdeckt ist, die gemessenen Maße von voreingestellten Maßen bei korrekter Positionierung unterscheiden und somit die inkorrekte Positionierung erkannt.

Da in Getränkeautomaten verwendete Behälter oftmals rotationssymmetrisch um ihre senkrechte Höhenachse sind, kann bei deren Positionierung unterhalb des Lasermoduls unter der vereinfachenden Annahme einer konstanten Füllhöhe deren Füllvolumen V mittels der Beziehung V = π x d x h (mit d = Behälterdurchmesser, h = gemessene Füllhöhe) abgeschätzt werden. Die Füllhöhe ergibt sich aus der (ggf. vorbestimmten) Entfernung zum Behälterboden minus der gemessenen Entfernung zur Granulatoberfläche. Informationen zur Geometrie des Behälters können aber auch durch Verwendung des Entfernungsmessers erhalten werden, indem während der Bewegung des Behälters in der Ebene senkrecht zur Messrichtung, z. B. zur Bereitstellung bzw. zur Einführung in die Getränkezubereitungseinheit Abstandswerte gemessen werden.

Bei einem unregelmäßigen Höhenprofil der Granulatoberfläche kann die Füllhöhe h, die als Funktion der Messposition aufgefasst werden kann, aus einem Mittelwert einzelner Abstandswerte beispielsweise aus einer periodischen Messung gebildet werden. Alternativ lässt sich das Volumen näherungsweise aus den einzelnen Abstandswerten des unregelmäßigen Höhenprofils bestimmen, wenn den einzelnen Abstandswerten einander angrenzende Teilvolumina zugeordnet werden und das Gesamtvolumen als die Summe der Teilvolumina berechnet wird.

Unter der weiteren Annahme, dass sich die Dichte eines eingefüllten Granulats, beispielsweise von Kaffeepulver, im Allgemeinen innerhalb eines relativ engen Intervalls bewegt, kann über die Beziehung m = p x V (mit m = Granulatmasse, p = Dichte des Granulats, V = Füllvolumen) die aktuell im Behälter befindliche Masse an Granulat abgeschätzt werden.

Durch die vergleichsweise kurze Messzeit des Entfernungsmessers, die weit unter einer Sekunde, ggf. unter einer Millisekunde liegen kann, ist eine Ermittlung der Füllhöhe nahezu in Echtzeit möglich. Daher kann der Getränkeautomat vorzugsweise eine Steuervorrichtung umfassen, welche den zeitlichen Ablauf mehrerer Abstandsmessungen steuert und für einen periodischen Messbetrieb ausgelegt ist. Mittels mehrere periodischer Messungen kann auch während der Befüllung des Behälters mit Granulat die Füllmenge grundsätzlich zu verschiedenen Zeitpunkten bestimmt werden.

Eine Echtzeitmessung des jeweils aktuellen Füllstands im Behälter kann von durch den Messbereich fallendes Granulat gestört sein. Gemäß einer bevorzugten Ausführungsform umfasst der Getränkeautomat daher eine Steuereinheit, welche einen abwechselnden Betrieb der Fülleinheit zum Auffüllen des Behälters, insbesondere den Betrieb eines Mahlwerks, und den Entfernungsmesser steuert. Hierzu werden bevorzugt Befüllungsvorgänge, insbesondere Mahlvorgänge, und Entfernungsmessungen von relativ kurzer zeitlicher Dauer aneinander gereiht. Damit lässt sich eine relativ hohe Messauflösung zur Überwachung eines Befüllungsvorgangs erreichen.
Bevorzugt ist eine Kombination von Befüllung und Messung, bei welcher der erste, ggf. größere Teil eines Befüllungsvorgangs, insbesondere eines Mahlvorgangs, zeitgesteuert ablaufen kann. Danach wird der Füllstand ermittelt und in dem Fall, dass die Füllstandmessung ergibt, dass zu wenig Pulver in den Behälter eingefüllt wurde, kann dieses durch weitere, kurze Befüllungsvorgänge ggf. im Wechsel mit weiteren Füllstandsmessungen behoben werden. Die Steuereinheit sorgt für Ausführung dieser Steuerung.

Damit kann auch ein während eines Befüllungsvorgangs leer werdender Vorratsbehälter erkannt werden, weil sich eine Abnahme des zugeführten Granulatstroms bzw. dessen vollständiges Versiegen bei der Behältererfassung ermittelt lässt. Der Benutzer kann dann z. B. durch eine Meldung im Display zum Befüllen des Vorratsbehälters aufgefordert werden.

Am Beispiel einer Kaffeemaschine erklärt: Enthält der Vorratsbehälter nicht genügend Kaffeebohnen, um eine erforderliche Menge an Kaffeepulver in den Behälter zu mahlen, nimmt die Menge von pro Zeiteinheit aus dem Mahlwerk in den Behälter fallendem Kaffeepulver zunächst schnell ab und versiegt schließlich ganz. Der Füllvorgang endet somit, bevor die erforderliche Menge an Kaffeepulver in den Behälter eingefüllt wurde. Die Abnahme des Pulverstroms vom Mahlwerk in den Behälter, zumindest aber dessen vollständiges Versiegen, ist direkt an der Füllhöhenzunahme im Behälter erkennbar, die unter dem erwarteten Wert liegt oder bei leerem Behälter Null ist. Gegebenenfalls kann die Erkennung dieses Fehlers mittels einer anschließenden Durchführung eines oder mehrerer kurzer Mahlvorgänge abgesichert werden.

Gemäß einer bevorzugten Ausführungsform kann der Getränkeautomat eine Recheneinheit umfassen, welche die Ergebnisse der Entfernungsmessung bearbeitet und aufgetretene Abweichungen von Sollwerten, insbesondere solche, die zu Fehlern im Getränkeherstellungsablauf führen, auf einem Display ausgibt. Beispielsweise könnte im Falle nicht oder nicht vollständig ausgeworfenen Tresters aus einer vorangegangenen Brühung einer Kaffeemaschine der Benutzer durch eine Meldung im Display zur Reinigung der Brüheinheit aufgefordert werden. Auch kann bei einer Überfüllung des Behälters oder bei einer mangelhaften Positionierung für den Befüllungsvorgang dieses auf dem Display gemeldet werden. Das Display kann Teil des Getränkeautomaten sein oder auch auf einem mobilen Gerät vorliegen, wobei in zweitem Falle die notwendigen Informationen insbesondere drahtlos an dieses Gerät übermittelt werden. Der Start einer folgenden Getränkeherstellung kann solange unterbunden werden.

Das erfindungsgemäße Verfahren zum Betrieb eines erfindungsgemäßen Getränkeautomaten, bzw. zur Füllstandsmessung eines Granulat-Behälters in einem erfindungsgemäßen Getränkeautomaten umfasst die Schritte:
a) Bereitstellen eines Behälters an einer oder in eine bestimmungsgemäße Betriebsposition,
b) Befüllen des Behälters
c) Messen des Füllstands in dem Behälter mittels optischer Abstandsmessung basierend auf der Laufstrecke eines Lichtstrahls, insbesondere mittels einer erfindungsgemäßen Vorrichtung zur optischen Abstandsmessung.
Das Verfahren ist dadurch gekennzeichnet, dass eine erste Messung während des Bereitstellens oder nach dem Bereitstellen des Behälters in Schritt a) erfolgt. Die erste Messung ermöglicht die Überprüfung einer korrekten Positionierung des Behälters und seines betriebsbereiten Zustands. Weicht nämlich das Messergebnis von einem werkseitig erfassten und geräteseitig hinterlegten Abstandswert ab, kann von einer Störung ausgegangen werden, wonach zum Beispiel der Behälter nicht korrekt positioniert oder nach dem vorangegangenen Zubereitungsvorgang nicht vollständig entleert ist.

Nach einer vorteilhaften Weiterbildung des Verfahrens kann der Behälter in Schritt b) nur teilweise befüllt werden, was eine Teilbefüllung bedeutet. Das Messen des Füllstands, also eine Füllstandsmessung gemäß Schritt c) und die Teilbefüllung des Behälters gemäß Schritt b) können abwechselnd erfolgen, wobei nach jeder Füllstandsmessung gemäß Schritt b) die Messergebnisse der Füllstandsmessungen in einem weiteren Schritt d) jeweils mit einem Zielwert verglichen werden. Vor Erreichen des Zielwerts erfolgt dann eine weitere Teilbefüllung gemäß Schritt b), bis eine letzte Füllstandsmessung gemäß Schritt c) im Schritt d) zu einem Erreichen des Zielwerts führt. Daraufhin wird keine weiter Befüllung mehr vorgenommen, sondern die Getränkezubereitung eingeleitet. Die Bezeichnungen der Verfahrensschritte für das Befüllen des Behälters als Schritt a), das Messen als Schritt b) und so weiter bedeutet also keine zwangsläufige Reihenfolge der Verfahrensschritte. So kann selbst bei einem z.B. unregelmäßigen Befüllungsvorgang eine stets gleiche Granulatmenge abgefüllt werden, indem zunächst eine Teilbefüllung mit einer vorbestimmten Menge vorgenommen wird, welche einer theoretischen Mindestmenge entspricht, die Füllstandshöhe ermittelt und mit einem Zielwert verglichen wird. Liegt die Füllstandshöhe unter dem Zielwert, wird alternierend eine weitere vorbestimmte, aber vergleichsweise geringe Granulatmenge nachgefüllt, die Füllstandshöhe ermittelt und erneut mit dem Zielwert verglichen, bis der Zielwert erreicht wurde. Auf diese Weise kann eine sehr genaue und wiederholbare Granulatmenge sichergestellt werden, die bei im Übrigen unveränderten Randbedingungen zu gleichbleibenden Geschmacksergebnissen führen kann.

Bevorzugt werden innerhalb eines Messintervalls mehrere Abstandswerte von unterschiedlichen Bereichen des Behälters gemessen. Dies kann insbesondere mittels einer Relativbewegung zwischen dem Laserstrahl des Entfernungsmessers und dem Behälters erfolgen wie oben ausführlich beschrieben.

Vorteile des erfindungsgemäßen Getränkeautomaten gegenüber bekannten Erkennungssystemen für Pulvermengen sind die Reduzierung des Anteils mechanischer Komponenten und der daraus folgenden verbesserten Zuverlässigkeit und mechanischen Robustheit. Im Gegensatz zu mechanischen Systemen zur Pulvermengenerkennung können hier keine mechanischen Funktionsstörungen wie Blockaden, z.B. hervorgerufen durch Kaffeepulverreste im Gerät, auftreten.

Die Erfindung ermöglicht eine direkte Kontrolle über die Granulatmenge und damit einer Regulierung des Geschmacks des hergestellten Getränks. Darüber hinaus kann eine Über- oder Unterfüllung oder ein nicht oder nicht vollständig ausgeworfener Trester aus einer vorangehenden Getränkeherstellung sicher erkannt und daraus folgende Probleme wie Verschmutzungen des Geräteinneren, Prozessabbrüche oder negative Beeinflussungen der Getränkequalität sicher vermieden werden.

Zusätzlich bietet die Erfindung eine Möglichkeit zur Präsenz- und Positionserkennung des Behälters. Diese Funktion ist insbesondere im Hinblick auf eine mögliche Fernbedienung ohne Sichtkontakt durch den Benutzer, z. B. mittels "Home Connect", von Vorteil. In einer möglichen Ausführungsform kann der Benutzer in derartigen Fällen durch eine Anzeige auf dem Display des Getränkeautomaten oder der Fernsteuerung, zum korrekten Einsetzen der Brüheinheit aufgefordert werden.

Das Prinzip der Erfindung wird im Folgenden anhand einer Zeichnung beispielshalber noch näher erläutert. Sie ist dabei lediglich als schematische Darstellungen der wichtigsten Elemente zu verstehen. In der Zeichnung zeigen:
Figur 1: Eine erste Ausführungsform eines Getränkeautomaten,
Figur 2: Eine zweite Ausführungsform eines Getränkeautomaten,
Figur 3: Eine dritte Ausführungsform mit einem bewegten Entfernungsmesser,
Figur 4: Eine vierte Ausführungsform mit einer bewegten Strahlumlenkung.
Figur 5: eine Blockschaltbildeines Betriebsverfahrens.

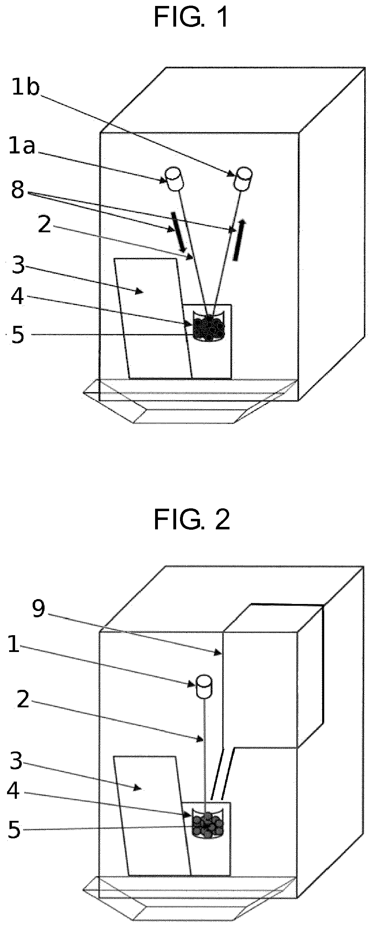

Figur 1 zeigt eine Ausführungsform eines Kaffeevollautomaten als Getränkeautomaten. Ein Laserentfernungsmesser besteht aus zwei räumlich getrennten Komponenten , nämlich einer Laserdiode 1a und einem Photosensor 1b, und misst mittels eines Laserstrahls 2, der von der Laserdiode 1a ausgesandt, an einem mit Kaffeepulver 5 gefüllten Brühtopf 4 reflektiert wird und in den Photosensor 1b trifft, die Entfernung zu einer unregelmäßigen Oberfläche der Füllung des Brühtopfes 4. Der Verlauf des Laserstrahls 2 ist mit den Pfeilen 8 verdeutlicht. Der Laserstrahl 2 führt zu einem einzigen Abstandswert zwischen der Laserdiode 1a, der Oberfläche des Kaffeepulvers 5 und dem Photosensor 1b. Die Messung ist daher als eindimensional zu bezeichnen.

In Figur 2 sind eine Lichtquelle (vgl. Laserdiode 1a gemäß Figur 1) und der Photosensor des Laserentfernungsmessers 1 in einer Einheit realisiert, nämlich in einem elektronischen Bauteil. Auch hier misst der Laserentfernungsmesser 1 mittels eines von ihm ausgesandten Laserstrahls 2 die Entfernung zu der Oberfläche der Füllung des Brühtopfes 4. Der Hin- und Rückweg des Laserstrahls 2 ist dabei sowohl hinsichtlich seiner Lage als auch hinsichtlich seiner Länge weitgehend derselbe.

Der Brühtopf 4 wird durch ein Mahlwerk 9 mit Kaffeepulver 5 gefüllt, und nach der Befüllung in die Brüheinheit 3 gefahren. Dort wird der Kaffee aufgebrüht und an einen Benutzer ausgegeben.

Eine Messung mit dem Laserentfernungsmesser 1 kann bereits vor der Befüllung des Brühtopfs 4 mit Kaffeepulver 5 erfolgen, wobei die Reflexion des Laserstrahls 2 am Boden des leeren Brühtopfes 4 einen anderen Abstandswert ergibt, als eine Vermessung ohne den Brühtopf 4. Damit kann sichergestellt werden, dass ein Brühtopf 4 zur Befüllung bereitsteht.

Normalerweise findet die Messung mit dem Laserentfernungsmesser 1 nach der Befüllung des Brühtopfs 4 mit Kaffeepulver 5 statt. Hier ergibt die Reflexion des Laserstrahls 2 an der Oberfläche des eingefüllten Kaffeepulvers 5 einen Abstandswert, mittels dessen bei bekanntem Abstandswert vom Boden des Brühtopfes 4 durch Subtraktion die Füllhöhe ermittelt werden kann. Der Abstandswert vom Boden des Brühtopfes 4 ist ein hinterlegter Wert, da sich der Brühtopf 4 im Grunde immer an derselben Position befindet. Er kann aber auch durch die vorangehend beschriebene Messung stets neu ermittelt oder überprüft werden.

Die Abstandsmessung kann auch während der Befüllung des Brühtopfes 4 stattfinden. Falls das einfallende Kaffeepulver den Weg des Laserstrahls 2 kreuzt und das Messergebnis verfälscht, kann die Einfüllung während der Messung unterbrochen werden und danach wieder einsetzen. Nach einer Teilbefüllung wird über die Reflexion des Laserstrahls 2 an der Oberfläche des eingefüllten Kaffeepulvers 5 der Abstandswert ermittelt, mittels dessen bei bekanntem Abstandswert vom Boden des Brühtopfes 4 durch Subtraktion die jeweils aktuelle Füllhöhe ermittelt werden kann. Stimmt die Füllhöhe mit einem Zielwert überein, wird keine weitere Befüllung vorgenommen, liegt sie darunter, erfolgt eine weitere Teilbefüllung.

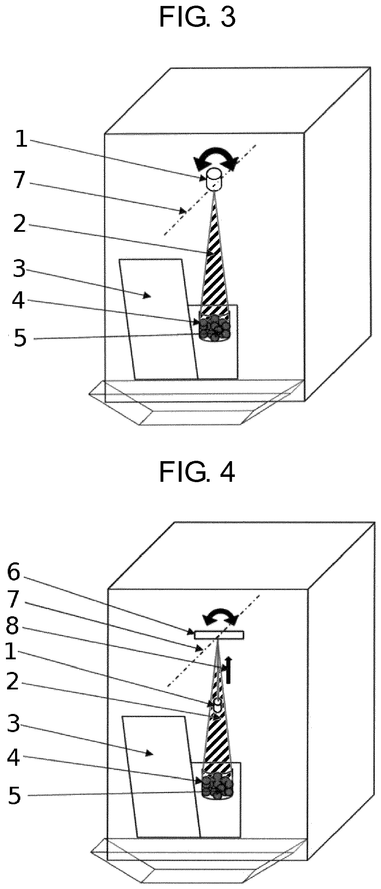

Figur 3 zeigt eine weitere Ausführungsform, deren Funktionsweise zur Füllhöhenmessung die gleiche ist wie in Figur 2. Abweichend davon wird nun der Laserentfernungsmesser 1 bewegt, sodass mehrere Abstandswerte bei unterschiedlichen Orientierungen des Laserentfernungsmessers 1 aufgenommen werden.

Der Laserentfernungsmesser 1 wird um eine Rotationsachse 7 verkippt, die orthogonal zur Emissionsrichtung des Laserstrahls 2 verläuft. Der Laserstrahl 2 beschreibt nun eine Linie über die Oberfläche der Behälterfüllung oder den Behälterboden und bildet einen "Laserfächer" in Form eines Winkelsegments. Dabei werden mehrere einzelne Abstandswerte erfasst, aus denen ein Linienprofil erstellt werden kann. Insofern handelt es sich um eine zweidimensionale Erfassung. Auch jetzt kann für jeden aufgenommenen Abstandswert bei Kenntnis der Ausrichtung des Laserentfernungsmessers 1 während der Messung des Abstandswertes und bei bekanntem Abstandswert bezüglich des leeren Brühtopfes 4 bei einer entsprechenden Ausrichtung des Laserentfernungsmessers 1 durch Subtraktion die jeweils aktuelle Füllhöhe am jeweiligen Messpunkt ermittelt, aus der Gesamtheit der Messpunkte ein Füllprofil erstellt und daraus die Granulatmenge berechnet werden.

Figur 4 zeigt eine weitere Ausführungsform mit einem bewegten Laserstrahl 2. Der Laserentfernungsmesser 1 wird mittels eines Spiegels 6 in den Brühtopf 4 umgelenkt. Der Pfeil 8 verdeutlicht den Laserstrahlverlauf 8 von dem Laserentfernungsmesser 1 zum Spiegel 6. Durch Verkippung des Spiegels 6 um eine Rotationsachse 7 orthogonal zur Emissionsrichtung des Laserstrahls 2 wird ein "Laserfächer" entsprechend der Figur 3 aufgespannt und die Messung erfolgt entsprechend der diesbezüglichen Beschreibung zu Figur 3.

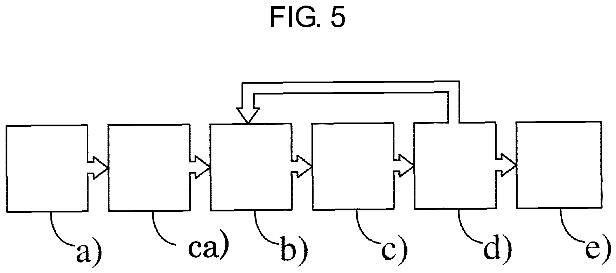

Figur 5 beschreibt ein Blockschaltbild für ein Verfahren zum Betrieb eines Getränkeautomaten, In einem ersten Schritt a) wird ein Behälter an einer oder in eine Betriebsposition bereitgestellt. Sofern es sich bei dem Behälter um eine Brühkammer handelt, stellt die Betriebsposition günstiger Weise sowohl die Befüllposition als auch die Messposition der Brühkammer dar.

Danach erfolgt in Schritt a) eine erste Messung, in der die korrekte Bereitstellung des Behälters überprüft wird. Da die bestimmungsgemäße Entfernung zum Behälterboden bekannt ist, lassen die gemessenen Abstandswerte im Vergleich zu dem vorbekannten Abstand des Behälterbodens sowohl eine korrekte Positionierung als auch einen korrekten Zustand des Behälters überprüfen. Ist der gemessene Abstand an einer Stelle zu groß, befindet sich kein Behälter an der vermessenen Position und der Behälter wurde nicht korrekt positioniert. Ist der gemessene Abstand zu klein, befinden sich vermutlich Tresterreste eines vorangegangenen Zubereitungsvorgangs in dem Behälter oder der Behälter ist verschoben.

In einem folgenden Schritt b) erfolgt eine Befüllung oder gegebenenfalls eine Teilbefüllung des Behälters mit einem Granulat.

Danach erfolgt ein weiterer Messschritt c), mit dem die Füllmenge überprüft wird. Ist sie korrekt, was sich durch einen Vergleich des Abstandswertes oder dem daraus errechneten Volumen mit einem vorbekannten Zielwert in einem Schritt d) ermitteln lässt, wird in einem folgenden Schritt e) die Getränkeherstellung eingeleitet.

Falls die Befüllung nicht korrekt ist, wird eine weitere Teilbefüllung b), vorzugsweise mit einer geringeren Menge als bei der initialen Befüllung vorgenommen. Anschließend erfolgt eine weitere Messung c) zur Überprüfung. Die Schleife mit Befüllung in Schritt b), Messung in Schritt c) und dem Vergleich des Messergebnisses mit einem Zielwert gemäß Schritt d) wird bis zur Feststellung einer korrekten Befüllung wiederholt, bevor mit Schritt e) die Getränkeherstellung beginnt.

Da es sich bei den vorhergehenden, detailliert beschriebenen Ausführungsformen um Ausführungsbeispiele handelt, können sie in üblicher Weise vom Fachmann in einem weiten Umfang modifiziert werden, ohne den Bereich der Erfindung zu verlassen. Insbesondere können auch die konkreten Ausgestaltungen der Ausführungsformen in anderer Form als in der hier beschriebenen folgen. Ebenso kann der Strahlverlauf in einer anderen Form ausgestaltet werden, wenn dies aus Platzgründen bzw. designerischen Gründen notwendig ist. Weiterhin schließt die Verwendung der unbestimmten Artikel "ein" bzw. "eine" nicht aus, dass die betreffenden Merkmale auch mehrmals oder mehrfach vorhanden sein können.

### Bezugszeichenliste

- 1: Laserentfernungsmesser
- 1a: Laserdiode
- 1b: Photosensor
- 2: Laserstrahl/Laserfächer
- 3: Brüheinheit
- 4: Brühtopf
- 5: Kaffeepulver
- 6: Spiegel
- 7: Rotationsachse
- 8: Laserstrahlverlauf
- 9: Mahlwerk

- a)... e): Verfahrensschritte

## Patentansprüche

1. Getränkeautomat zur Herstellung von Getränken unter Verwendung eines Granulats (5) umfassend einen Behälter (4) zur Aufnahme des Granulats (5), eine Fülleinheit (9) zur Einfüllung des Granulats (5) in den Behälter (4) und eine Getränkezubereitungseinheit (3), **wobei** der Getränkeautomat eine Vorrichtung zur optischen Abstandsmessung (1) umfasst, die den Füllstand in dem Behälter (4) in Form eines Abstandswertes basierend auf der Laufstrecke eines Lichtstrahls (2) misst, **gekennzeichnet durch** eine Bewegungseinheit, die dazu ausgelegt ist, den Lichtstrahl (2) der Vorrichtung zur optischen Abstandsmessung (1) relativ zum Behälter (4) dermaßen zu bewegen, dass innerhalb eines Messintervalls mehrere Abstandswerte von unterschiedlichen Bereichen des Behälters (4) gemessen werden können.

2. Getränkeautomat nach Anspruch 1, **dadurch gekennzeichnet, dass** die Vorrichtung zur optischen Abstandsmessung (1) den Abstandswert mittels einer Laufzeitmessung und/oder einer Phasenlagenmessung des emittierten Lichtstrahls (2) bestimmt.

3. Getränkeautomat nach einem der vorangehenden Ansprüche, **dadurch gekennzeichnet, dass** die Vorrichtung zur optischen Abstandsmessung (1) einen Vertical Cavity Surface Emitting Laser (VCSEL) umfasst.

4. Getränkeautomat nach einem der vorangehenden Ansprüche, **dadurch gekennzeichnet, dass** die Lichtquelle (1a) und der Photosensor (1b), insbesondere als Laserdiode (1a) und Photohalbleiterelement (1b) in einem einzigen elektronischen Bauteil vorliegen.

5. Getränkeautomat nach einem der vorangehenden Ansprüche, **gekennzeichnet durch** ein optisches Element (6) zur Umlenkung des Lichtstrahls (2) der Vorrichtung zur optischen Abstandsmessung (1) zur Ermittlung des Abstandswerts.

6. Getränkeautomat nach Anspruch 1, **dadurch gekennzeichnet, dass** die Bewegungseinheit piezoelektrische Elemente und/oder eine Mechanik umfasst.

7. Getränkeautomat nach einem der vorangehenden Ansprüche, gekennzeichnet durcheine Steuereinheit, welche einen abwechselnden Betrieb der Fülleinheit (9) zur Auffüllung des Behälters (4) und der Vorrichtung zur optischen Abstandsmessung (1) steuert.

8. Verfahren zum Betrieb eines Getränkeautomaten nach Anspruch 1, umfassend die Schritte:
a) Bereitstellen des Behälters (4) an einer oder in eine Betriebsposition,
b) Befüllen des Behälters (4),
c) Messen des Füllstands in dem Behälter (4) mittels optischer Abstandsmessung (1) basierend auf der Laufstrecke eines Lichtstrahls (2),
**dadurch gekennzeichnet, dass** eine erste Messung während des oder nach dem Bereitstellen(s) des Behälters (4) in Schritt a) erfolgt.

9. Verfahren nach Anspruch 9, **dadurch gekennzeichnet, dass** der Behälter (4) in Schritt b) nur teilweise befüllt wird (Teilbefüllung) und das Messen des Füllstands (Füllstandsmessung) gemäß Schritt c) und die Teilbefüllungen des Behälters (4) gemäß Schritt b) abwechselnd erfolgen, wobei nach jeder Füllstandsmessung gemäß Schritt b) die Messergebnisse der Füllstandsmessungen in einem Schritt d) jeweils mit einem Zielwert verglichen werden und vor Erreichen des Zielwerts eine weitere Teilbefüllung gemäß Schritt b) erfolgt.

## Claims

1. Beverage machine for producing beverages using a granulated material (5) comprising a container (4) for receiving the granulated material (5), a filling unit (9) for filling the granulated material (5) into the container (4) and a beverage preparation unit (3), **wherein** the beverage machine comprises a device for visual distance measurement (1) which measures the fill level in the container (4) in the form of a distance value on the basis of the course of a light beam (2), **characterised by** a movement unit, which is designed to move the light beam (2) of the device for optical distance measurement (1) relative to the container (4) in such a way that a number of distance values of different regions of the container (4) can be measured within a measuring interval.

2. Beverage machine according to claim 1, **characterised in that** the device for optical distance measurement (1) determines the distance value by means of a runtime measurement and/or a phasing measurement of the emitted light beam (2).

3. Beverage machine according to one of the preceding claims, **characterised in that** the device for optical distance measurement (1) comprises a Vertical Cavity Surface Emitting Laser (VCSEL).

4. Beverage machine according to one of the preceding claims, **characterised in that** the light source (1a) and the photo sensor (1b) are present, in particular as a laser diode (1a) and photo semiconductor element (1b) in a single electronic component.

5. Beverage machine according to one of the preceding claims, **characterised by** an optical element (6) for deflecting the light beam (2) of the device for optical distance measurement (1) in order to emit the distance value.

6. Beverage machine according to claim 1, **characterised in that** the movement unit comprises piezoelectric elements and/or a mechanism.

7. Beverage machine according to one of the preceding claims, **characterised by** a control unit, which controls an alternating operation of the filling unit (9) for filling the container (4) and the device for optical distance measurement (1).

8. Method for operating a beverage machine according to claim 1, comprising the steps:
a) providing the container (4) on or in an operating position,
b) filling the container (4),
c) measuring the fill level in the container (4) by means of optical distance measurement (1) on the basis of the course of a light beam (2),
**characterised in that** a first measurement takes place during or after providing the container (4) in step a).

9. Method according to claim 9, **characterised in that** in step b) the container (4) is only filled partially (partial filling) and the measurement of the fill level (fill level measurement) according to step c) and the partial filling of the container (4) according to step b) take place alternately, wherein after each fill level measurement according to step b) the measuring results of the fill level measurements in a step d) are compared in each case with a target value and a further partial filling according to step b) takes place before the target value is reached.

## Revendications

1. Distributeur de boissons destiné à la fabrication de boissons avec utilisation d'un granulat (5), comprenant un réservoir (4) destiné à recevoir le granulat (5), une unité de remplissage (9) destinée au remplissage du granulat (5) dans le réservoir (4), et une unité de préparation de boissons (3), **dans lequel** le distributeur de boissons comprend un dispositif pour la mesure optique de distance (1) qui mesure le niveau de remplissage dans le réservoir (4) sous forme d'une valeur de distance sur la base du trajet de déplacement d'un rayon lumineux (2), **caractérisé par** une unité de déplacement qui est conçue pour déplacer le rayon lumineux (2) du dispositif de mesure optique de distance (1) par rapport au réservoir (4) de manière à ce que plusieurs valeurs de distance de différentes zones du réservoir (4) puissent être mesurées pendant un intervalle de mesure.

2. Distributeur de boissons selon la revendication 1, **caractérisé en ce que** le dispositif de mesure optique de distance (1) détermine la valeur de distance au moyen d'une mesure de temps de propagation et/ou d'une mesure de positions de phases du rayon lumineux émis.

3. Distributeur de boissons selon l'une quelconque des revendications précédentes, **caractérisé en ce que** le dispositif de mesure optique de distance (1) comprend un laser à émission de surface et à cavité verticale (VCSEL).

4. Distributeur de boissons selon l'une quelconque des revendications précédentes, **caractérisé en ce que** la source lumineuse (1a) et le photocapteur (1b) sont présents en un seul composant électronique, notamment en tant que diode laser (1a) et élément semi-conducteur photosensible (1b).

5. Distributeur de boissons selon l'une quelconque des revendications précédentes, **caractérisé par** un élément optique (6) destiné à dévier le rayon lumineux (2) du dispositif de mesure optique de distance (1) dans le but de déterminer la valeur de distance.

6. Distributeur de boissons selon la revendication 1, **caractérisé en ce que** l'unité de déplacement comprend des éléments piézoélectriques et/ou un dispositif mécanique.

7. Distributeur de boissons selon l'une quelconque des revendications précédentes, **caractérisé par** une unité de commande laquelle commande un fonctionnement en alternance de l'unité de remplissage (9) pour le remplissage du réservoir (4) et du dispositif de mesure optique de distance (1).

8. Procédé de fonctionnement d'un distributeur de boissons selon la revendication 1, comprenant les étapes :
a) mise à disposition du réservoir (4) sur ou dans une position de fonctionnement,
b) remplissage du réservoir (4),
c) mesure du niveau de remplissage dans le réservoir (4) au moyen de la mesure optique de distance (1) sur la base du trajet d'un rayon lumineux (2),
**caractérisé en ce qu'**une première mesure est réalisée à l'étape a) pendant ou après la mise à disposition du réservoir (4).

9. Procédé selon la revendication 9, **caractérisé en ce qu'**à l'étape b), le réservoir (4) est seulement rempli partiellement (remplissage partiel) et **en ce que** la mesure du niveau de remplissage (mesure du niveau de remplissage) selon l'étape c) et les remplissages partiels du réservoir (4) selon l'étape b) sont réalisés en alternance, dans lequel, après chaque mesure de niveau de remplissage selon l'étape b), les résultats de mesure des mesures de niveau de remplissage sont respectivement comparés avec une valeur cible dans une étape d), et un remplissage partiel supplémentaire selon l'étape b) est réalisé avant l'obtention de la valeur cible.
